# EUROPEAN PATENT APPLICATION

(11) **EP 3 244 363 A1**
(43) Date of publication of application: **15.11.2017**
(21) Application number: 17167203.3
(22) Date of filing: 20.04.2017
(51) Int. Cl.: G06Q 20/40, G06Q 20/20

(54) **COMMODITY SALES DATA PROCESSING DEVICE, COMMODITY SALES DATA PROCESSING SYSTEM, AND COMMODITY SALES DATA PROCESSING METHOD**

(30) Priority: 27.04.2016 JP 2016089145
(71) Applicant: Toshiba TEC Kabushiki Kaisha, Tokyo 141-0032 (JP)
(72) Inventor: MIYAGI, Daisuke, Shinagawa-ku, Tokyo 141-8562 (JP); KOGOSHI, Takahiro, Shinagawa-ku, Tokyo 141-8562 (JP)
(74) Representative: Takeuchi, Maya

(57) **Abstract**

According to one embodiment, a face feature detection unit (biometric information detection unit) activated by a detected motion activation unit detects a face feature (biometric information). A salesperson identification unit identifies whether or not an operator of a self-checkout POS terminal is any one of registered salespersons by comparing the detected face feature with a face feature of a salesperson registered in a salesperson master. A motion detection unit detects a predetermined motion of the salesperson. An operation mode change unit changes a mode of the self-checkout POS terminal to an operation mode corresponding to the salesperson under a condition in which the salesperson identification unit identifies that the operator of the self-checkout POS terminal is the previously registered salesperson and the motion detection unit detects the predetermined motion.

## Description

### FIELD

The present invention relates to the technologies in a payment system in general, and embodiments described herein relate more particularly to a commodity sales data processing device, a commodity sales data processing system, and a commodity sales data processing method.

### BACKGROUND

A payment system called a self-checkout payment system or a semi-self-checkout payment system that can be used by a customer who performs a payment process in person when the customer buys a commodity in a store is known. The self-checkout payment system or the semi-self-checkout payment system is designed on the assumption that the customer performs all or part of the payment process. Accordingly, when any error occurs while the customer performs the payment process, or when a salesperson performs an operation of maintenance of the system, the salesperson switches a mode of the payment system to a salesperson mode, and performs an operation to cope with the error or the maintenance operation.

For example, when the salesperson switches the mode of the payment system to the salesperson mode, a technology for performing the switching to the salesperson mode by causing the payment system to recognize a face image of the salesperson is known in the related art. However, for example, in the payment system of the related art, if the salesperson performs the payment process in person when the salesperson buys a commodity, since the payment system may be unintentionally switched to the salesperson mode, there is a problem that the payment process is not able to be performed properly.

To solve such problems, there is provided a commodity sales data processing device for use by a customer who performs a settlement process in person when the customer buys a commodity in a store, the device comprising:
a biometric information detection unit configured to detect biometric information of an operator who operates the commodity sales data processing device;
a salesperson identification unit configured to identify whether or not the operator having the biometric information detected by the biometric information detection unit is a salesperson based on biometric information items of salespeople of the store;
a motion detection unit configured to detect a predetermined motion of the operator; and
an operation mode change unit configured to change an operation mode of the commodity sales data processing device under a condition in which the salesperson identification unit identifies that the operator is the salesperson and the motion detection unit detects the predetermined motion.

Preferably, the salesperson identification unit identifies whether or not the operator having the biometric information detected by the biometric information detection unit is the salesperson based on salesperson data acquired by associating the biometric information items of the salespeople of the store and predetermined motions of the salespeople with the salesperson, and
the motion detection unit detects the predetermined motion associated with the salesperson identified by the salesperson identification unit.

Preferably still, the motion detection unit detects the motion of the operator based on the biometric information of the operator detected by the biometric information detection unit.

Preferably yet, the biometric information detection unit detects a face feature from an image comprising a face of the operator, and
the motion detection unit detects a motion with at least a movement of the face of the operator.

Suitably, the biometric information of the operator comprises at least one of positions of eyes, nose, and mouth of the operator.

Suitably, the motion detection unit uses a plurality of captured images to detect the predetermined motion of the operator.

Suitably still, the commodity sales data processing device is a self-checkout POS terminal.

The invention also relates to a commodity sales data processing system comprising the commodity sales data processing device as defined above, the system comprising:
a POS terminal comprising the biometric information detection unit,
a biometric information transmission unit configured to transmit the biometric information, and an operation mode change unit configured to change an operation mode of the commodity sales data processing system; and
a server device comprising a biometric information reception unit configured to receive the biometric information from the POS terminal,
wherein the operation mode change unit comprises an operation mode change instruction unit configured to transmit an instruction for changing an operation mode of the POS terminal to the POS terminal under a condition in which the salesperson identification unit identifies that the operator is the salesperson and the motion detection unit detects the predetermined motion.

The invention further relates to a commodity sales data processing method comprising:
detecting biometric information of an operator who operates a commodity sales data processing device for use by a customer who performs a settlement process in person when the customer buys a commodity in a store;
identifying whether or not the operator having the biometric information detected in the detecting of the biometric information is a salesperson based on biometric information items of salespeople of the store;
detecting a predetermined motion of the operator; and
changing an operation mode of the commodity sales data processing device under a condition in which the operator is identified as the salesperson in the identifying and the predetermined motion is detected in the detecting of the predetermined motion.

Preferably, detecting biometric information of the operator precedes detecting the predetermined motion of the operator.

Preferably still, detecting biometric information of the operator follows detecting the predetermined motion of the operator.

Preferably yet, detecting biometric information of the operator and detecting the predetermined motion of the operator are simultaneously performed.

Suitably, identifying whether or not the operator having the biometric information detected is the salesperson based on salesperson data acquired by associating the biometric information items of the salespeople of the store and predetermined motions of the salespeople with the salesperson.

Suitably still, detecting the predetermined motion of the operator comprises detecting the biometric information of the operator.

Suitably yet, detecting biometric information of the operator comprises detecting at least one of positions of eyes, nose, and mouth of the operator.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an example of a configuration when a plurality of self-checkout POS terminals according to a first embodiment is provided in a store.
FIG. 2 is a perspective view illustrating an example of an external appearance of the self-checkout POS terminal according to the first embodiment.
FIG. 3 is a hardware block diagram illustrating an example of a hardware configuration of the self-checkout POS terminal.
FIG. 4 is a functional block diagram illustrating an example of a functional configuration when the self-checkout POS terminal performs a switching process to a salesperson mode.
FIG. 5 is a diagram for describing a motion detection example based on a movement of a face.
FIG. 6 is a flowchart illustrating a flow of a switching process between a salesperson mode and a customer mode which is performed by the self-checkout POS terminal.
FIG. 7 is a flowchart illustrating flows of a salesperson identification process and a motion detection process performed by the self-checkout POS terminal.
FIG. 8 is a hardware block diagram illustrating an example of a hardware configuration of a self-checkout POS system according to a second embodiment.
FIG. 9 is a functional block diagram illustrating an example of a functional configuration when the self-checkout POS system according to the second embodiment performs a switching process to a salesperson mode.

### DETAILED DESCRIPTION

An object of an exemplary embodiment is to provide a commodity sales data processing device, a commodity sales data processing system, and a method which are capable of reliably switching the mode of the commodity sales data processing device to a salesperson mode only when a salesperson intends to switch the mode of the commodity sales data processing device to the salesperson mode.

In general, according to one embodiment, a commodity sales data processing device includes a biometric information detection unit, a salesperson identification unit, a motion detection unit, and an operation mode change unit. The biometric information detection unit detects biometric information of an operator who operates the commodity sales data processing device. The salesperson identification unit identifies whether or not the operator having the biometric information detected by the biometric information detection unit is any one of salespersons based on biometric information items of the salespersons of a store. The motion detection unit detects a predetermined motion of the operator. The operation mode change unit changes an operation mode of the commodity sales data processing device under a condition in which the salesperson identification unit identifies that the operator is the salesperson and the motion detection unit detects the predetermined motion.

### First Embodiment

Hereinafter, a commodity sales data processing device according to a first embodiment will be described in detail. In the present embodiment, a self-checkout point of sales (POS) terminal used by a customer who performs a sales registration operation and a settlement operation in person will be described as an example of the commodity sales data processing device. A semi-self-checkout POS terminal which is used by a salesperson who performs a sales registration process and is used by a customer who performs a settlement process may be used as the commodity sales data processing device.

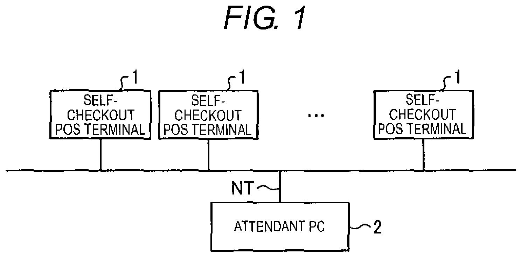

FIG. 1 is a schematic diagram illustrating an example of a configuration of a self-checkout POS terminal according to the first embodiment when a plurality of self-checkout POS terminals is provided within a store. As illustrated in FIG. 1, a plurality of self-checkout POS terminals 1 and an attendant personal computer (PC) 2 are provided in the store. For example, each self-checkout POS terminal I and the attendant PC 2 are electrically connected to a communication line NT such as a local area network (LAN).

Each self-checkout POS terminal 1 includes a registration unit that reads a symbol such as a barcode or a two-dimensional code assigned to a commodity to be purchased, and a settlement unit that performs a settlement operation based on commodity information corresponding to the read symbol. The customer performs both the sales registration operation of the registration unit and the settlement operation of the settlement unit in person. The self-checkout POS terminal 1 performs the sales registration process based on the sales registration operation performed by the customer. The self-checkout POS terminal 1 performs the settlement process based on the settlement operation performed by the customer. The detailed configuration of the self-checkout POS terminal 1 will be described below.

The sales registration process refers to a process of displaying and storing commodity information such as a commodity name or price of the commodity on the self-checkout POS terminal 1 based on an input commodity code. The settlement process refers to a process of displaying a total amount or a change amount regarding transaction with the customer on the self-checkout POS terminal 1 and performing payment based on the commodity information acquired through the sales registration process.

The attendant PC 2 is a PC or a mobile PC. The attendant PC 2 receives information indicating a use status or an error occurrence status of the self-checkout POS terminal 1 through the communication line NT. The attendant PC 2 displays the received information on a display which is not illustrated in FIG. 1. The salesperson of the store monitors the use status of the self-checkout POS terminal 1, a state of an error, and whether or not there is an illegal operation performed by the customer based on the information displayed on the attendant PC 2.

### Description of Schematic Configuration of Self-checkout POS Terminal

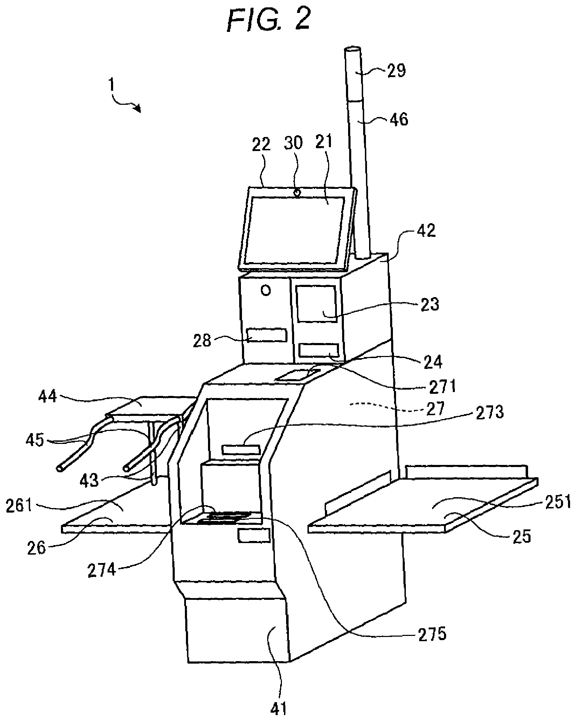

FIG. 2 is a perspective view illustrating an example of an external appearance of the self-checkout POS terminal 1. As illustrated in FIG. 2, the self-checkout POS terminal 1 includes a first housing 41 and a second housing 42. The first housing 41 houses a cash register 27 therein. The cash register 27 stores money (coins and bills) received from the customer separately according to the type of money, and returns money (coins and bills) as change to the customer.

The first housing 41 includes a coin inserting port 271 for depositing coins into the cash register 27, and a coin discharging port 273 for returning coins from the cash register 27. The first housing 41 includes a bill depositing slot 274 for depositing paper bills in the cash register 27, and a bill dispensing port 275 for returning bills as change returned from the cash register 27.

The first housing 41 includes a placing table 25 on which a basket that stores commodities to be purchased is placed on a right side surface. The placing table 25 includes a first measurement unit 251. The first housing 41 includes a placing table 26 on which a carrier bag (not illustrated) into which the commodities are inserted is set on a left side surface. The placing table 26 includes a second measurement unit 261. The first measurement unit 251 measures a total weight of the basket placed on the placing table 25 and the commodities within the basket. The second measurement unit 261 measures a total weight of the carrier bag placed on the placing table 26 and the commodities within the carrier bag.

The placing table 26 includes two supports 43 that extend upwards from a top surface of the placing table 26, a temporal placing table 44 that is formed on the top of the supports 43, and two extension rods 45. The extension rods 45 are rods for hanging the carrier bag filling with the commodities on which the sales registration operation is already performed. The carrier bag is open while handles are hung up to the extension rods 45, and the commodity is easily inserted into the carrier bag. The temporal placing table 44 is a table on which commodity (bean curd or egg) which is easily broken, among the commodities of which commodity codes are read by a reader 23 to be described below, is temporally placed. The commodity placed on the temporal placing table 44 is inserted into the bag last.

The second housing 42 is provided on the top of the first housing 41. The second housing 42 houses the reader 23, a printer 24, and a card reader 28 therein. For example, the reader 23 is a unit that optically reads the commodity code included in the symbol assigned to the commodity. The printer 24 prints transaction information of the commodities purchased by the customer, and issues a receipt. The card reader 28 electrically reads a customer code from an inserted customer card. The reader 23 may optically read a symbol printed on the customer card, and thus, the customer code may be input.

A display 22 that displays payment information or the commodity information of the commodity with the registration operation of the customer is provided on the top of the second housing 42. The display 22 displays guidance necessary for the customer to appropriately perform the registration operation or the payment operation to the customer. The display 22 displays how to correct the operation or how to call the salesperson when the customer mistakenly performs the operation.

The display 22 includes a touch panel 21 on a front surface. The touch panel 21 displays keys. Positions on the touch panel 21 corresponding to various keys displayed on the display 22 are operated, and thus, the key is operated. A capturing unit 30 that captures an image including the face of the customer who is operating the self-checkout POS terminal 1 is provided in the vicinity of an outer frame of the display 22. The capturing unit 30 is a camera including a solid-state imaging device such as a complementary metal-oxide semiconductor (CMOS) or a charge-coupled device (CCD).

The second housing 42 includes a cylindrical pole 46 that extends upwards on a rear side. A light-emitting unit 29 that emits when the customer performs an operation for calling the salesperson is provided at an upper leading end of the pole 46.

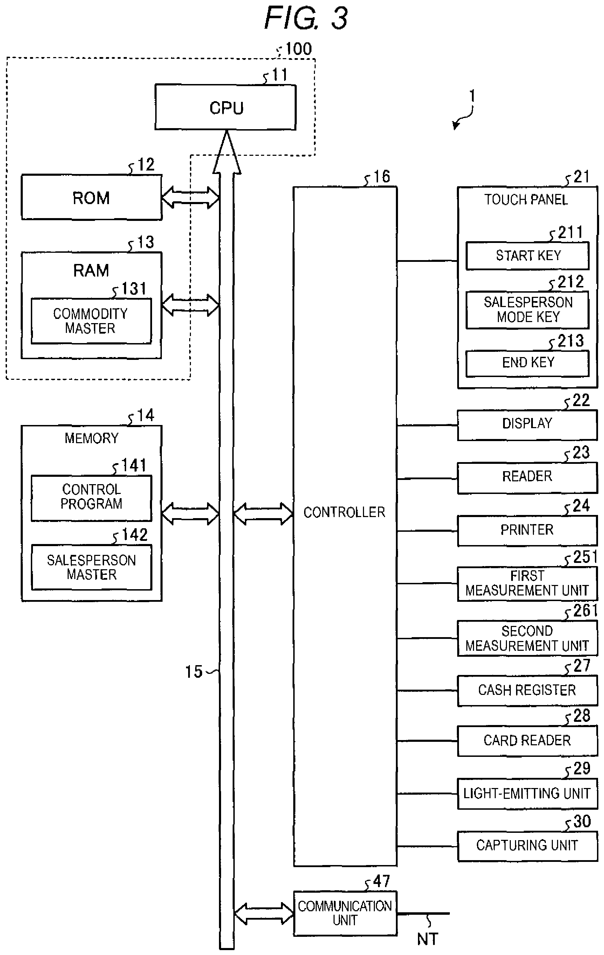

The customer takes the commodity out of the basket placed on the placing table 25 and places the taken commodity over the reader 23. Thus, the reader 23 reads the symbol assigned to the commodity. The customer inserts the commodity into the carrier bag placed on the placing table 26. The first measurement unit 251 measures weights before and after the commodities are taken out of the basket placed on the placing table 25, and thus, a control unit 100 (see FIG. 3) to be described below measures the changed weight. The second measurement unit 261 measures weights before and after the commodities are inserted into the carrier bag placed on the placing table 26, and thus, the control unit 100 measures the changed weight. If the changed weights are equal, the control unit 100 determines that the customer correctly performs the operation (that is, the customer does not perform an illegal operation). Meanwhile, if the changed weights are different, the control unit 100 determines that there is a possibility that the customer does not correctly perform the operation (that is, the customer performs the illegal operation). For example, if the changed weights are different, a message of "cannot measure weight" or "please stay off the table" is displayed on the display 22, and the customer is warned.

### Description of Hardware Configuration of Self-checkout POS Terminal

Hereinafter, a hardware configuration of the self-checkout POS terminal 1 will be described with reference to FIG. 3. FIG. 3 is a block diagram illustrating an example of the hardware configuration of the self-checkout POS terminal 1. As illustrated in FIG. 3, the self-checkout POS terminal 1 includes a central processing unit (CPU) 11, a read only memory (ROM) 12, a random access memory (RAM) 13, and a memory 14. The CPU 11 is a main control unit. The ROM 12 stores various programs. The RAM 13 loads various data items. The memory 14 stores a control program 141 and a salesperson master 142.

The CPU 11, the ROM 12, the RAM 13, and the memory 14 are connected to each other through a data bus 15. The CPU 11, the ROM 12, and the RAM 13 constitute the control unit 100. That is, the control unit 100 reads the control program 141 stored in the memory 14, and loads the read control program into the RAM 13. The CPU 11 operates according to the control program 141, and thus, the control unit 100 performs various processes to be described below. That is, the self-checkout POS terminal 1 has a general computer system configuration in which the central processing unit (CPU) 11 as the main control unit executes the control program 141.

The control program 141 is provided while being recorded as a file having a form that can be installed or executed in a computer-readable recording medium such as a CD-ROM, a flexible disk (FD), a CD-R, or a digital versatile disc (DVD). Alternatively, the control program 141 stored in the computer connected via a network such as the Internet may be downloaded into the self-checkout POS terminal 1 through a communication unit 47 to be described below via the network.

The RAM 13 includes the commodity master 131 that stores the commodity information. The commodity master 131 is a table which associates the product code of each commodity and the commodity information such as "commodity name" or "commodity price" of the commodity and stores the associated information. The memory 14 is a hard disc drive (HDD) that retains stored information even though power is disconnected or a nonvolatile memory such as a flash memory, and stores the control program 141. The memory 14 includes the salesperson master 142. The salesperson master 142 is a table which associates a face feature of the salesperson who is likely to use the self-checkout POS terminal 1 in a salesperson mode and motion information indicating an intention expression of using the self-checkout POS terminal 1 in the salesperson mode when the salesperson uses the self-checkout POS terminal 1 in the salesperson mode with the salesperson of the store and stores the associated information as salesperson data. The face feature and the motion performed by the salesperson will be described below in detail.

The control unit 100 is connected to the touch panel 21, the display 22, the reader 23, the printer 24, the first measurement unit 251, the second measurement unit 261, the cash register 27, the card reader 28, the light-emitting unit 29, and the capturing unit 30 through the data bus 15 and a controller 16.

The touch panel 21 includes a start key 211 corresponding to a "start key" displayed on the display 22, an end key 213 corresponding to an "end key" displayed on the display 22, and a salesperson mode key 212 corresponding to a "salesperson mode key" displayed on the display 22.

The start key 211 is pressed when the customer who operates the self-checkout POS terminal 1 starts the sales registration process. That is, when the customer presses the start key 211, the self-checkout POS terminal 1 starts the sales registration process.

The end key 213 is pressed when the customer who operates the self-checkout POS terminal 1 ends the sales registration operation. That is, when the customer presses the end key 213, the self-checkout POS terminal 1 ends the sales registration process.

The salesperson mode key 212 is pressed when the salesperson uses the self-checkout POS terminal 1 in the salesperson mode. That is, when the salesperson presses the salesperson mode key 212, the self-checkout POS terminal 1 enters a standby state in which the self-checkout POS terminal operates in the salesperson mode. Thereafter, the self-checkout POS terminal 1 starts the operation in the salesperson mode after it is checked whether or not a person who presses the salesperson mode key 212 is a previously registered salesperson. The process of checking whether or not the person who presses the salesperson mode key 212 is the previously registered salesperson will be described below.

When the use in the salesperson mode is ended, if the salesperson presses the end key 213, the self-checkout POS terminal 1 ends the salesperson mode. That is, the end key 213 also has a function of instructing to end the salesperson mode.

The control unit 100 is connected to the communication unit 47 through the data bus 15. The communication unit 47 transmits and receives information to and from another self-checkout POS terminal 1 or the attendant PC 2 through the communication line NT.

### Description of Functional Configuration of Self-checkout POS Terminal

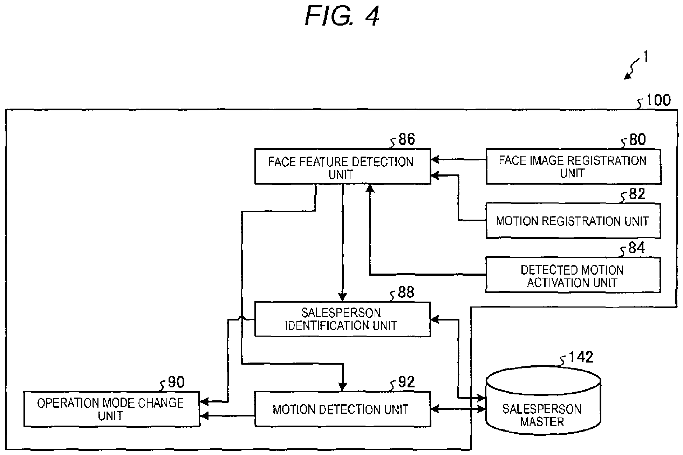

Hereinafter, a functional configuration when the self-checkout POS terminal 1 performs a switching process to the salesperson mode will be described with reference to FIG. 4. FIG. 4 is a functional block diagram illustrating an example of the functional configuration when the self-checkout POS terminal 1 performs the switching process to the salesperson mode.

The control unit 100 of the self-checkout POS terminal 1 operates as a face image registration unit 80, a motion registration unit 82, a detected motion activation unit 84, a face feature detection unit 86, a salesperson identification unit 88, a motion detection unit 92, and an operation mode change unit 90 which are illustrated in FIG. 4 by operating according to the control program 141 (FIG. 3). A functional configuration when the control unit 100 performs the switching process to the salesperson mode which is a distinctive configuration of the exemplary embodiment in addition to the above-described sales registration process and settlement process will be described.

The face image registration unit 80 performs a face image registration process of registering a face feature or a face image of the salesperson who is likely to use the self-checkout POS terminal 1 in the salesperson mode in the salesperson master 142. Specifically, the face feature detection unit 86 to be described below performs a face feature detection process of detecting the face feature as biometric information on the face image of the salesperson captured by the capturing unit 30. The face feature detected from the salesperson who is likely to use the self-checkout POS terminal 1 in the salesperson mode are associated with the salesperson, and the associated information is registered in the salesperson master 142. The face image registration process is performed by a specific self-checkout POS terminal 1.

The face feature is a visual feature capable of distinguishing between faces of individuals. For example, in the example of the present embodiment, positions of feature points (eyes, nose, or mouth) which universally exist on the faces and the positional relationship between the feature points are used as the face features. If the number of registered salespersons is increased, in order to identify the salesperson with high accuracy, it is preferable that the face feature to be used can be changed or a threshold for performing the identification can be changed. Accordingly, the face image of the salesperson captured by the capturing unit 30 and the detected face feature are registered in the salesperson master 142. Therefore, when the number of registered salespersons is increased, the face feature is detected from the registered face image again, and thus, it is possible to change a criterion for performing the identification. Here, personal authentication based on the face image is generally used in a wide range in recent years, and various detection methods of the face feature and identification algorithms have been suggested. In the present embodiment, any face features may be used. Any identification algorithm may be used.

The motion registration unit 82 performs a motion registration process of registering motion information specific to each salesperson which indicates an intention expression to use the self-checkout POS terminal 1 in the salesperson mode in the salesperson master 142. In the present embodiment, the device prompts the salesperson to make a motion with movement of the face, and registers an image (moving image) captured by the capturing unit 30 at this time in the salesperson master 142. Here, at least a movement of the face feature detected from the moving image captured by the capturing unit 30 is digitized, and the digitized information is registered in the salesperson master 142, as motion information associated with the salesperson. An example of a specific motion with the movement of the face made by each salesperson will be described. By doing this, motion information indicating the face feature and the movement of the face feature which are associated with the salesperson of the store and are registered in the salesperson master 142 is transmitted to and registered in the salesperson master 142 included in the another self-checkout POS terminal 1, as salesperson data, via the communication line NT. Thus, any self-checkout POS terminal 1 included in the store similarly performs the respective processes to be described below. A predetermined motion indicating to an intention expression to use the self-checkout POS terminal 1 in the salesperson mode may be a motion different for each salesperson, or may be the same motion between the salesperson. Particularly, when the predetermined motion is the same motion between the salespersons, only the salespersons of the store and the face features of the salespersons may be associated and registered in the salesperson master 142, as the salesperson data, and the motion information need not be associated and registered. In this case, the content of the predetermined motion common to the salespersons is registered in the motion detection unit 92 to be described below.

The detected motion activation unit 84 supplies a trigger for starting the face feature detection process to the face feature detection unit 86 to be described below. Specifically, the detected motion activation unit 84 detects whether or not the salesperson mode key 212 (FIG. 3) is pressed, and causes the face feature detection unit 86 to start the face feature detection process when the salesperson mode key 212 is pressed.

The face feature detection unit 86 is an example of a biometric information detection unit. The face feature detection unit 86 performs the face feature detection process of capturing the image by the capturing unit 30 and detecting the face feature from the captured image. Specifically, the face feature detection unit 86 detects the same face feature as the face feature detected when the face image registration unit 80 performs the above-described face image registration process from the captured image. Since there is a time lag between when the salesperson presses the salesperson mode key 212 and when the salesperson looks into the display 22, there is a possibility that the salesperson will not be pictured on the captured image. Accordingly, the capturing unit 30 consecutively captures images at a predetermined time interval (for example, at an interval of 1/30 seconds). The face feature detection process is performed on the captured images. The face feature detection unit 86 sends the detected face features to the salesperson identification unit 88 and the motion detection unit 92. In this case, since the face feature is not able to be detected when the face of the salesperson is not pictured on the image, the detection result of the face feature of only the image from which the face feature is detected among a series of captured images and a time (for example, time stamp) when the image is acquired are sent to the salesperson identification unit 88 and the motion detection unit 92.

The salesperson identification unit 88 performs a salesperson identification process of comparing the face feature detected by the face feature detection unit 86 with the face features of the salespersons registered in the salesperson master 142. The salesperson identification unit 88 determines which salesperson corresponds to the person pictured on the captured image. For example, the salesperson identification unit 88 sends a specific ID number indicating the identified salesperson to the operation mode change unit 90 to be described below. In this case, since the detection results of the plurality of face features is sent to the salesperson identification unit 88 from the face feature detection unit 86 as described above, the salesperson identification unit 88 performs the salesperson identification process on the detection results of the plurality of face features. When the persons pictured on a plurality of preset images are the same salesperson as the comparison result (that is, when the persons are recognized as the same salesperson over a predetermined time), the salesperson identification unit 88 determines that the pictured person is the salesperson. Since there is a concern that the face of the salesperson who looks into the display 22 will be blurred, the size of the face or the location of the face is changed. Accordingly, it is possible to improve comparison accuracy by performing the comparison using the plurality of images captured for different times.

The motion detection unit 92 performs a motion detection process of detecting a motion made by the salesperson based on the face feature detected by the face feature detection unit 86. Specifically, a type of the motion made by the salesperson is detected based on the movement of the face feature detected by the face feature detection unit 86 from the plurality of temporally continuous images. The detected motion is compared with the motion information items of the salespersons registered in the salesperson master 142. The motion detection unit 92 identifies the salesperson and the motion information registered by the salesperson matching the motion pictured on the captured image. The motion detection unit 92 sends a specific ID number indicating the identified motion information to the operation mode change unit 90 to be described below. When the same motion is set for the salespersons, the motion detection unit 92 may detect the motion registered in the motion detection unit 92.

The salesperson identification process performed by the salesperson identification unit 88 and the motion detection process performed by the motion detection unit 92 may be performed in any order. Specifically, the salesperson identification process may be previously performed, and the motion detection process may be performed after the salesperson is identified. The processes may be performed in this order, and thus, since a motion which will be made by the identified salesperson is able to be predicted based on the information registered in salesperson master 142, whether or not the predicted motion is made may be detected in the motion detection process. Thus, it is possible to efficiently perform the motion detection process.

In contrast, the motion detection process may be previously performed, and the salesperson identification process may be performed after the motion is detected. The processes are performed in this order, and thus, since a salesperson who will make the detected motion is able to be predicted based on the information registered in the salesperson master 142, whether or not the predicted salesperson is pictured may be identified in the salesperson identification process. Thus, it is possible to efficiently perform the salesperson identification process.

The salesperson identification process and the motion detection process may be simultaneously performed in parallel. As stated above, since there is a concern that the face of the salesperson who looks into the display 22 will be blurred, it is preferable that the comparison is also performed using the face features acquired from the plurality of images when the salesperson identification process is performed. The plurality of images is required to perform the motion detection process. Accordingly, the identification result of the salesperson identification process may be previously determined or the detection result of the motion detection process may be previously determined in some conditions of the captured images (moving images).

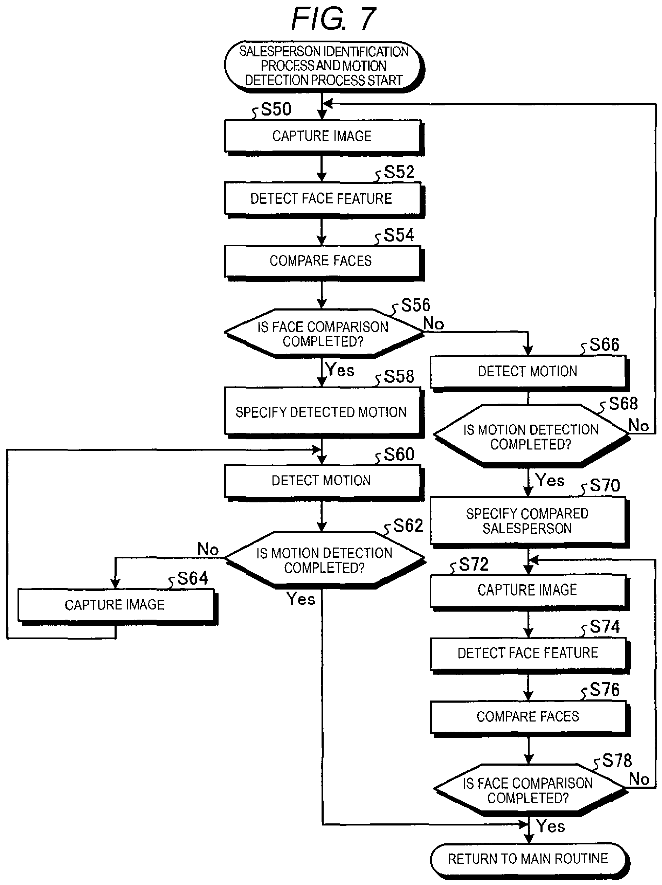

For example, when the pictured face is small, if a necessary feature point is able to be detected from even an image insufficient to perform the salesperson identification process, there is a possibility that the motion detection process will be performed. Thus, an identification target or a detection target in the other process can be specified based on the result (identification result of the salesperson identification process or the detection result of the motion detection process) acquired by previously performing the determination in time. Such processing aspects are performed, and thus, it is possible to more efficiently perform the processes. In the description (see FIG. 7) of the flows of the salesperson identification process and the motion detection process to be described below, an example in which the salesperson identification process and the motion detection process are simultaneously performed will be described.

The operation mode change unit 90 determines whether or not the identification result of the salesperson identification process and the detection result of the motion detection process match the information registered in the salesperson master 142. That is, the operation mode change unit determines whether or not the ID number of the salesperson identified by the salesperson identification unit 88 and the ID number of the motion detected by the motion detection unit 92 match the information registered in the salesperson master 142. When the ID number of the salesperson and the ID number of the motion match the registered information, the operation mode change unit 90 switches the mode of the self-checkout POS terminal 1 from the customer mode to the salesperson mode. Meanwhile, when the ID number of the salesperson and the ID number of the motion do not match the registered information, when the salesperson identification unit 88 is not able to identify that the pictured person is the salesperson, or when the motion detection unit 92 is not able to detect the motion, the operation mode change unit 90 does not switch the mode of the self-checkout POS terminal 1 from the customer mode to the salesperson mode.

The operation mode change unit 90 switches the mode of the self-checkout POS terminal 1 to the customer mode under a condition in which the end key 213 is pressed when the self-checkout POS terminal 1 is in the state of the salesperson mode.

### Description of Motion Detection Method

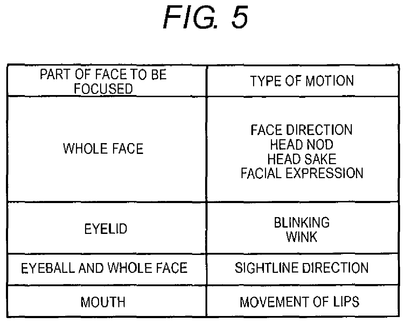

Hereinafter, an example of the motion detection performed by the motion detection unit 92 of the self-checkout POS terminal 1 will be described with reference to FIG. 5. FIG. 5 is a diagram for describing the motion detection example based on the movement of the face.

The motion detection unit 92 detects the motion by detecting how the location of the face feature is moved with time. The motion detection unit 92 may detect a plurality of types of motions illustrated in FIG. 5.

A face direction, a head node, a head shake, and a facial expression may be detected by detecting how the positions of the eyes, nose, and mouth which are the face features in a lump are moved with time.

Blinking and wink may be detected by focusing on the positions of the eyes (eyelids).

A sightline direction may be detected by focusing on the positions of the eyes (eyeballs) and the whole face.

The movement of the lips may be detected by focusing the location of the mouth.

As stated above, the motion detection unit 92 can detect the motion corresponding to the part of the face to be focused.

### Description of Flows of Switching Process between Salesperson Mode and Customer Mode

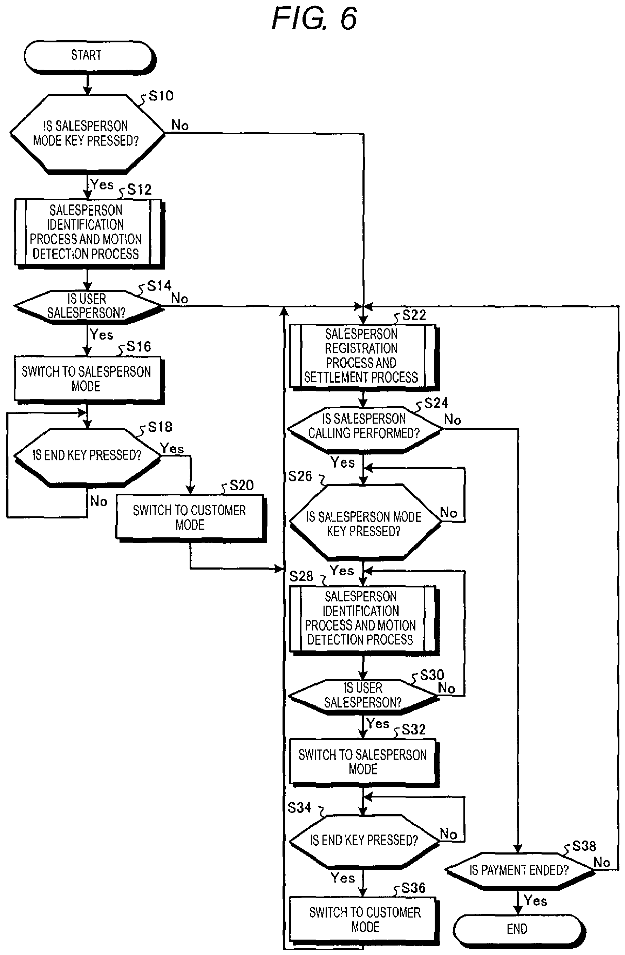

The flow of the switching process between the salesperson mode and the customer mode which is performed by the self-checkout POS terminal 1 will be described with reference to FIG. 6. FIG. 6 is a flowchart illustrating the flow of the switching process between the salesperson mode and the customer mode which is performed by the self-checkout POS terminal 1.

The detected motion activation unit 84 determines whether or not the salesperson mode key 212 is pressed (Act 10). When the salesperson mode key 212 is pressed (Act 10; Yes), the process proceeds to Act 12, and otherwise (Act 10; No), the process proceeds to Act 22. The process of Act 10 is performed as an interruption process.

The salesperson identification unit 88 performs the salesperson identification process and the motion detection unit 92 performs the motion detection process (Act 12). The flow of the detailed process performed in Act 12 will be described below.

The operation mode change unit 90 determines whether or not the person pictured on the image captured by the capturing unit 30 is the salesperson registered in the salesperson master 142 based on the result of the salesperson identification process and the result of the motion detection process (Act 14). When the pictured person is the registered salesperson (Act 14; Yes), the process proceeds to Act 16, and otherwise (Act 14; No), the process proceeds to Act 22.

The operation mode change unit 90 switches the mode of the self-checkout POS terminal 1 to the salesperson mode (Act 16).

The operation mode change unit 90 determines whether or not the end key 213 is pressed (Act 18). When the end key 213 is pressed (Act 18; Yes), the process proceeds to Act 20, and otherwise (Act 18; No), Act 18 is repeated.

The operation mode change unit 90 switches the mode of the self-checkout POS terminal 1 to the customer mode (Act 20). Thereafter, the process proceeds to Act 22.

The self-checkout POS terminal 1 performs the sales registration process and the settlement process (Act 22).

The control unit 100 determines whether or not an operation for calling the salesperson is performed (Act 24). When the operation for calling the salesperson is performed (Act 24; Yes), the process proceeds to Act 26, and otherwise (Act 24; No), the process proceeds to Act 38. The process of Act 24 is performed as an interruption process.

The detected motion activation unit 84 determines whether or not the salesperson mode key 212 is pressed (Act 26). When the salesperson mode key 212 is pressed (Act 26; Yes), the process proceeds to Act 28, and otherwise (Act 26; No), Act 26 is repeated.

The salesperson identification unit 88 performs the salesperson identification process and the motion detection unit 92 performs the motion detection process (Act 28). The flow of the detailed process performed in Act 28 will be described below.

The operation mode change unit 90 determines whether or not the person pictured on the image captured by the capturing unit 30 is the salesperson registered in the salesperson master 142 based on the result of the salesperson identification process and the result of the motion detection process (Act 30). When the person is the registered salesperson (Act 30; Yes), the process proceeds to Act 32, and otherwise (Act 30; No), the process returns to Act 28.

The operation mode change unit 90 switches the mode of the self-checkout POS terminal 1 to the salesperson mode (Act 32).

The operation mode change unit 90 determines whether or not the end key 213 is pressed (Act 34). When the end key 213 is pressed (Act 34; Yes), the process proceeds to Act 36, and otherwise (Act 34; No), Act 34 is repeated.

The operation mode change unit 90 switches the mode of the self-checkout POS terminal 1 to the customer mode (Act 36). Thereafter, the process returns to Act 22.

The control unit 100 determines whether or not a payment process of the self-checkout POS terminal 1 is ended by detecting that the settlement process is completed (Act 38). When the payment process is ended (Act 38; Yes), the processes of FIG. 6 are ended, and otherwise (Act 38; No), the process returns to Act 22.

### Description of Flows of Salesperson Identification Process and Motion Detection Process

Hereinafter, the flows of the salesperson identification process and the motion detection process performed in Act 12 and Act 28 of FIG. 6 will be described with reference to FIG. 7. FIG. 7 is a flowchart illustrating the flows of the salesperson identification process and the motion detection process performed by the self-checkout POS terminal 1.

The capturing unit 30 captures the image (Act 50).

The face feature detection unit 86 performs the face feature detection process of detecting the face feature from the captured image (Act 52).

The salesperson identification unit 88 performs the salesperson identification process of comparing the face feature detected by the face feature detection unit 86 with the face feature of each salesperson registered in the salesperson master 142 (Act 54).

The salesperson identification unit 88 determines whether or not the face comparison is completed (Act 56). When the face comparison is completed (Act 56; Yes), the process proceeds to Act58, and otherwise (Act 56; No), the process proceeds to Act 66.

The motion detection unit 92 specifies the motion detected by the motion detection process as the motion made by the identified salesperson based on the information registered in the salesperson master 142 and the result of the salesperson identification process (Act 58).

The motion detection unit 92 performs the motion detection process of detecting the motion made by the salesperson based on the face feature detected by the face feature detection unit 86 (Act 60).

The motion detection unit 92 determines whether or not the motion detection is completed (Act 62). When the motion detection is completed (Act 62; Yes), the process returns to the main routine (FIG. 6), and otherwise (Act 62; No), the process proceeds to Act 64.

The capturing unit 30 captures the image (Act 64). Thereafter, the process returns to Act 60.

When the salesperson identification unit 88 does not complete the face comparison in Act 56 (Act 56; No), the motion detection unit 92 performs the motion detection process (Act 66).

The motion detection unit 92 determines whether or not the motion detection is completed (Act 68). When the motion detection is completed (Act 68; Yes), the process proceeds to Act 70, and otherwise (Act 68; No), the process returns to Act 50.

The salesperson identification unit 88 specifies the salesperson to be compared by the salesperson identification process from the salesperson registered in the salesperson master 142 based on the result of the motion detection process (Act 70).

The capturing unit 30 captures the image (Act 72).

The face feature detection unit 86 performs the face feature detection process (Act 74).

The salesperson identification unit 88 performs the salesperson identification process (Act 76).

The salesperson identification unit 88 determines whether or not the face comparison is completed (Act 78). When the face comparison is completed (Act 78; Yes), the process returns to the main routine (FIG. 6), and otherwise (Act 78; No), the process returns to Act 72.

The salesperson identification process and the motion detection process are performed along the flowchart of FIG. 7, and thus, it is possible to efficiently perform the salesperson identification process and the motion detection process irrespective of the condition of the image captured by the capturing unit 30.

### Second Embodiment

Hereinafter, a second embodiment will be descried. In the second embodiment, the self-checkout POS terminal 1 (commodity sales data processing device) described in the first embodiment is constituted as a self-checkout POS system 1b (commodity sales data processing system) that includes a self-checkout POS terminal 1a and a server device 3 connected to the self-checkout POS terminal 1a through a communication line NT. The self-checkout POS system 1b has a configuration different from the configuration of the above-described self-checkout POS terminal 1, but has the same function.

### Description of Hardware Configuration of Self-checkout POS System

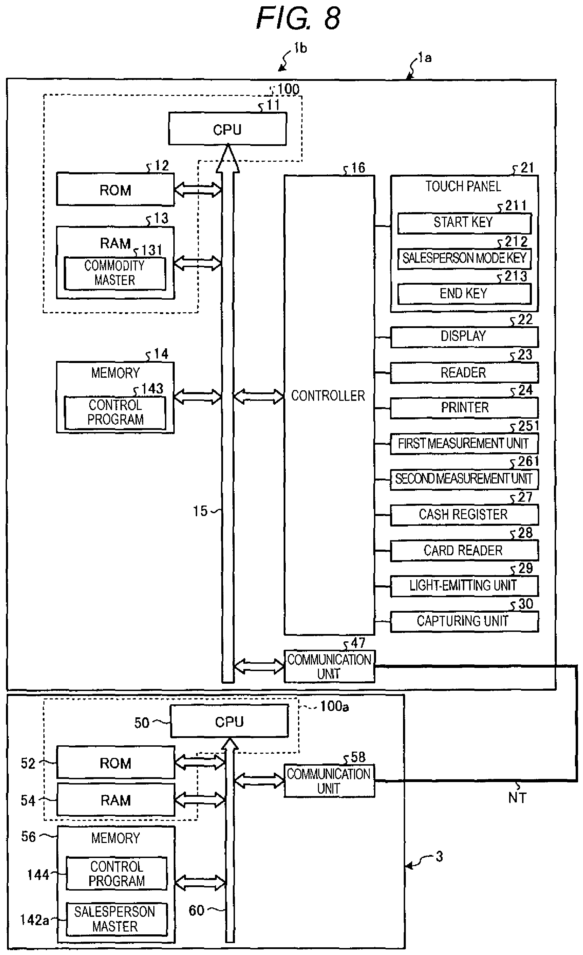

A hardware configuration of the self-checkout POS system 1b will be described with reference to FIG. 8. FIG. 8 is a block diagram illustrating an example of the hardware configuration of the self-checkout POS system 1b. As illustrated in FIG. 8, the self-checkout POS system 1b includes the self-checkout POS terminal 1a and the server device 3. The self-checkout POS terminal 1a and the server device 3 are cooperated, and thus, the same function as that of the self-checkout POS terminal 1 described in the first embodiment is realized.

The self-checkout POS terminal 1a has the same hardware configuration as that of the above-described self-checkout POS terminal 1, and is different from the above-described self-checkout POS terminal in that the memory 14 includes a control program 143. Individual components are the same as those of the self-checkout POS terminal 1, and thus, the description thereof will be omitted.

The server device 3 is electrically connected to the self-checkout POS terminal 1a through the communication line NT. The server device 3 includes a central processing unit (CPU) 50, a read only memory (ROM) 52, a random access memory (RAM) 54, a memory 56, and a communication unit 58. The CPU 50 is a main control unit. The ROM 52 stores various programs. The RAM 54 loads various data items. The memory 56 stores a control program 144 and a salesperson master 142a. The communication unit 58 transmits and receives information to and from the self-checkout POS terminal 1a or the attendant PC 2 (FIG. 1) through the communication line NT.

The CPU 50, the ROM 52, the RAM 54, and the memory 56 are connected to each other through a data bus 60. The CPU 50, the ROM 52, and the RAM 54 constitute a control unit 100a. That is, the control unit 100a reads the control program 144 stored in the memory 56, and loads the read control program into the RAM 54. The CPU 50 operates according to the control program 144, and thus, the control unit 100a performs various processes to be described below. That is, the server device 3 has a configuration of a general computer system in which the central processing unit (CPU) 50 as the main control unit executes the control program 144.

The control program 144 is provided while being recorded as a file having a form that can be installed or executed in a computer-readable recording medium such as a CD-ROM, a flexible disk (FD), a CD-R, or a digital versatile disc (DVD). Alternatively, the control program 144 stored in the computer connected via a network such as the Internet may be downloaded to the server device 3 through a communication unit 58 via the network.

### Description of Functional Configuration of Self-checkout POS System

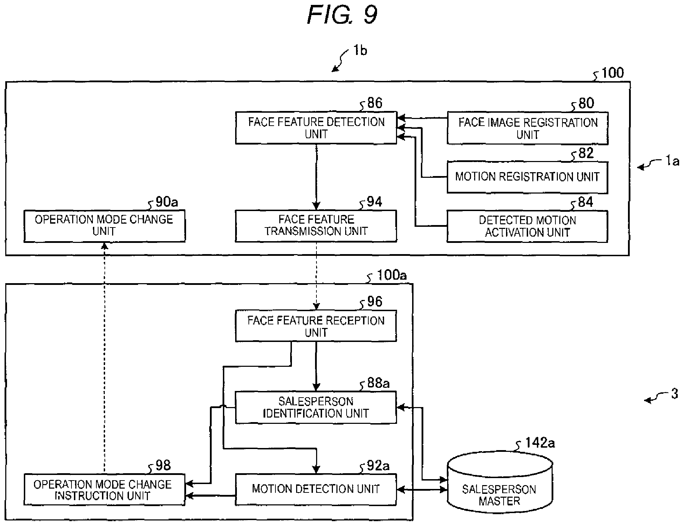

Hereinafter, a functional configuration when the self-checkout POS terminal 1a performs the switching process to the salesperson mode will be described with reference to FIG. 9. FIG. 9 is a functional block diagram illustrating an example of the functional configuration when the self-checkout POS terminal 1a performs the switching process to the salesperson mode.

In the self-checkout POS system 1b (commodity sales data processing system), the server device 3 performs some functions performed by the self-checkout POS terminal 1 in the first embodiment. That is, the self-checkout POS system 1b transmits the face feature detected from the face image captured by the capturing unit 30 and the captured image to the server device 3, and the server device 3 performs the salesperson identification process and the motion detection process. The server device 3 determines whether or not to switch the customer mode to the salesperson mode, and transmits the determination result to the self-checkout POS terminal 1a.

The control unit 100 of the self-checkout POS terminal 1a operates as the face image registration unit 80, the motion registration unit 82, the detected motion activation unit 84, the face feature detection unit 86, a face feature transmission unit 94, and an operation mode change unit 90a which are illustrated in FIG. 9 by operating according to the control program 143. A functional configuration when the control unit 100 performs the switching process to the salesperson mode which is a distinctive configuration of the exemplary embodiment in addition to the above-described sales registration process and settlement process described in the first embodiment will be described.

The functions of the face image registration unit 80, the motion registration unit 82, the detected motion activation unit 84, and the face feature detection unit 86 which are included in the control unit 100 are the same as those in the first embodiment, and thus, the description thereof will be omitted.

The face feature transmission unit 94 is an example of a biometric information transmission unit. The face feature transmission unit 94 transmits the face feature detected by the face feature detection unit 86 and the face image captured by the capturing unit 30 to the server device 3 through the communication line NT.

The operation mode change unit 90a receives an instruction of an operation mode change instruction unit 98, to be described below, which is included in the server device 3, and switches the mode of the self-checkout POS terminal 1a from the customer mode to the salesperson mode.

The control unit 100a of the server device 3 operates as a face feature reception unit 96, a salesperson identification unit 88a, a motion detection unit 92a, and the operation mode change instruction unit 98 illustrated in FIG. 9 by operating according to the control program 144.

The functions of the salesperson identification unit 88a and the motion detection unit 92a which are included in the control unit 100a are the same as those of the first embodiment, and thus, the description thereof will be omitted.

The face feature reception unit 96 is an example of a biometric information reception unit. The face feature reception unit 96 receives the face feature and the face image transmitted from the face feature transmission unit 94.

The operation mode change instruction unit 98 determines whether or not to switch the mode of the self-checkout POS terminal 1a from the customer mode to the salesperson mode based on the identification result of the salesperson identification unit 88a and the detection result of the motion detection unit 92a. When the mode of the self-checkout POS terminal 1a is switched from the customer mode to the salesperson mode, the operation mode change instruction unit instructs the operation mode change unit 90a of the self-checkout POS terminal 1a to switch from the customer mode to the salesperson mode.

The flow of the switching process between the salesperson mode and the customer mode which is performed by the self-checkout POS system 1b is substantially the same as the flow of the process performed by the self-checkout POS terminal 1 described in the first embodiment except for a portion in which information is transmitted and received between the self-checkout POS terminal 1a and the server device 3, and thus, the description thereof will be omitted.

As described above, according to the self-checkout POS terminal 1 (commodity sales data processing device) of the first embodiment, the face feature detection unit 86 (biometric information detection unit) activated by the detected motion activation unit 84 detects the face feature (biometric information). The salesperson identification unit 88 identifies whether or not an operator of the self-checkout POS terminal 1 is any one of the registered salespersons by comparing the detected face feature with the face feature of the salesperson registered in the salesperson master 142. The motion detection unit 92 detects a predetermined motion of the salesperson. The operation mode change unit 90 changes the mode of the self-checkout POS terminal 1 to the operation mode corresponding to the salesperson under a condition in which the salesperson identification unit 88 identifies that the operator of the self-checkout POS terminal 1 is the previously registered salesperson and the motion detection unit 92 detects a predetermined motion. That is, when the mode of the self-checkout POS terminal is switched to the salesperson mode, it is necessary for the salesperson to make a predetermined motion indicating an intention expression to switch the mode thereof to the salesperson mode. Accordingly, when the salesperson buys commodities in person, the salesperson does not make a predetermined motion, and thus, the mode of the self-checkout POS terminal may not be arbitrarily switched to the salesperson mode. Since the operator does not have a name tag and does not input a code, the operator may pretend to be another person. It is possible to reduce the risk of illegally using the self-checkout POS terminal 1 in such a case.

According to the self-checkout POS terminal 1 (commodity sales data processing device) of the first embodiment, the face feature detection unit 86 (biometric information detection unit) activated by the detected motion activation unit 84 detects the face feature (biometric information). The salesperson identification unit 88 identifies whether or not the operator of the self-checkout POS terminal 1 is any one of the registered salespersons by comparing the detected face feature with the salesperson data registered in the salesperson master 142. The motion detection unit 92 detects a predetermined motion of the salesperson. The operation mode change unit 90 changes the mode of the self-checkout POS terminal 1 to the operation mode corresponding to the salesperson under a condition in which the salesperson identification unit 88 identifies that the operator of the self-checkout POS terminal 1 is the previously registered salesperson and the motion detection unit 92 detects the motion associated with the salesperson. Accordingly, when the salesperson buys commodities in person, the salesperson does not make a predetermined motion, and thus, the mode of the self-checkout POS terminal may not be arbitrarily switched to the salesperson mode. Since the operator does not have a name tag and does not input a code, the operator may pretend to be another person. It is possible to reduce the risk of illegally using the self-checkout POS terminal 1 in such a case.

According to the self-checkout POS terminal 1 of the first embodiment, the motion detection unit 92 detects the motion of the operator based on the face feature (biometric information) of the operator detected by the face feature detection unit 86 (biometric information detection unit). Accordingly, since a sensor that detects information required to perform personal identification and a sensor that detects information required to perform motion detection are shared, it is possible to simplify the configuration of the device.

According to the self-checkout POS terminal 1 of the first embodiment, the face feature detection unit 86 (biometric information detection unit) detects the face feature from the image including the face of the operator. The motion detection unit 92 detects the motion with the movement of the face of the operator. Accordingly, the salesperson makes a natural motion, and thus, the salesperson can change the mode of the self-checkout POS terminal 1 to the salesperson mode.

According to the self-checkout POS terminal 1 of the first embodiment, the motion detection unit 92 specifies and detects the motion which is associated with the salesperson and is registered in the salesperson master 142 based on the identification result under a condition in which the identification result of the salesperson, of the identification result of the salesperson (operator) identified by the salesperson identification unit 88 and the detection result of the motion detected by the motion detection unit 92, is determined earlier than the detection result of the motion in time. The salesperson identification unit 88 identifies the operator from the salesperson which is associated with the detected operation and is registered in the salesperson master 142 under a condition in which the detection result of the motion is determined earlier than the identification result of the salesperson in time. Accordingly, since the salesperson can make a predetermined motion at a desired timing, the salesperson makes a more natural motion, and thus, the salesperson can change the mode of the self-checkout POS terminal 1 to the salesperson mode.

According to the self-checkout POS system 1b (commodity sales data processing system) of the second embodiment, the face feature detection unit 86 (biometric information detection unit) activated by the detected motion activation unit 84 included in the self-checkout POS terminal 1a detects the face feature (biometric information). The face feature transmission unit 94 (biometric information transmission unit) transmits the detected face feature to the server device 3. The salesperson identification unit 88a included in the server device 3 identifies whether or not the operator of the self-checkout POS terminal 1a is any one of the registered salespersons by comparing the face feature received by the face feature reception unit 96 (biometric information reception unit) with the face feature of the salesperson registered in the salesperson master 142a. The motion detection unit 92a detects a predetermined motion of the salesperson based on the face feature. The operation mode change instruction unit 98 transmits an instruction for instructing the self-checkout POS terminal 1a to operate in the salesperson mode to the self-checkout POS terminal 1a under a condition in which the salesperson identification unit 88a identifies that the operator of the self-checkout POS terminal 1a is the previously registered salesperson and the motion detection unit 92a detects a predetermined motion of the salesperson. The operation mode change unit 90a of the self-checkout POS terminal 1a receives the instruction from the operation mode change instruction unit 98, and switches the mode of the self-checkout POS terminal 1a to the salesperson mode. Accordingly, when the plurality of self-checkout POS terminals 1a is provided in the store, it is not necessary to provide the salesperson master for each self-checkout POS terminal 1a.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, although the example in which the exemplary embodiment applies to the self-checkout POS terminal 1 used by the customer who performs the commodity registration and the settlement in person is described in the present embodiment, the application scope of the exemplary embodiment is not limited to the self-checkout POS terminal 1. For example, the exemplary embodiment may apply to a semi-self-checkout POS terminal which is provided in a semi-self-checkout lane, is used by the salesperson who performs the commodity registration, and is used by the customer who performs the settlement process, as a settlement device.

Although it is described in the present embodiment that the self-checkout POS terminal recognizes that the registered salesperson makes a predetermined motion and the mode of the self-checkout POS terminal 1 is switched to the salesperson mode, an operation authorization corresponding to the identified salesperson may be granted when the mode of the self-checkout POS terminal is switched to the salesperson mode. That is, the operation authorization may be classified into an operation authorization granted to an executive or a manager, an operation authorization granted to a general employee, an operation authorization granted to a part-time salesperson, and the classified operation authorizations may be set.

The present embodiment applies to the personal identification when the mode of the self-checkout POS terminal 1 is switched from the customer mode to the salesperson mode, but the application scope is not limited thereto. That is, the present embodiment may apply to a case where the self-checkout POS terminal identifies which customer of the previously registered customers corresponds to the customer who is the operator of the self-checkout POS terminal 1. The self-checkout POS terminal 1 may be switched between operation forms corresponding to customer attributes such as "regular customer", "skilled person", and "beginner" based on the identified result.

Although it is described in the embodiment that the salesperson identification process and the motion detection process are performed based on the face feature which is the biometric information detected from the image captured by the capturing unit 30, the salesperson identification process and the motion detection process may be performed based on other information. For example, a pad having a fingerprint detection function may be provided in the self-checkout POS terminal 1 instead of the capturing unit 30, and the salesperson may touch the pad with their finger and may input a previously registered predetermined hand-written character when the salesperson changes the mode of the self-checkout POS terminal 1 to the salesperson mode and does a work. In this case, the salesperson identification process may be performed by detecting the fingerprint of the finger touched on the pad. The motion detection process may be performed by recognizing the input hand-written character. Accordingly, it is possible to realize the same function as that described in the present embodiment.

Of course, the motion detected by the motion detection process may be detected using information different from the biometric information used for performing the salesperson identification process. That is, the identification of the salesperson may be performed using the biometric information such as the fingerprint or the face feature, and the motion detection may be performed using another means. For example, a half body image of the operator of the self-checkout POS terminal 1 may be captured, and the motion may be detected based on the movement (gesture) of the finger or hand of the operator detected from the captured image. Alternatively, a measurement sensor that measures a distance from the display 22 to the target may be provided in the self-checkout POS terminal 1, a change of a distance up to the salesperson who looks into the display 22 may be measured by the measurement sensor, and a predetermined motion may be detected by recognizing the previous and later movement of the body of the salesperson.

The face image registration process performed by the face image registration unit 80 and the motion registration process performed by the motion registration unit 82 are performed using the image captured by the capturing unit 30 included in the self-checkout POS terminal as described in the present embodiment. For example, a camera may be provided in a salesperson terminal provided in a back yard of the store, and these processes may be performed using an image captured by this camera.

When the salesperson identification process and the motion detection process are performed, there may be an appropriate time limitation. That is, when the salesperson identification process or the motion detection process are not ended over a preset predetermined time, it may be determined that the salesperson is not pictured or there is not an intention to switch the mode of the self-checkout POS terminal to the salesperson mode, and the mode of the self-checkout POS terminal may not be switched to the salesperson mode.

## Claims

1. A commodity sales data processing device for use by a customer who performs a settlement process in person when the customer buys a commodity in a store, the device comprising:
a biometric information detection unit configured to detect biometric information of an operator who operates the commodity sales data processing device;
a salesperson identification unit configured to identify whether or not the operator having the biometric information detected by the biometric information detection unit is a salesperson based on biometric information items of salespeople of the store;
a motion detection unit configured to detect a predetermined motion of the operator; and
an operation mode change unit configured to change an operation mode of the commodity sales data processing device under a condition in which the salesperson identification unit identifies that the operator is the salesperson and the motion detection unit detects the predetermined motion.

2. The device according to claim 1,
wherein the salesperson identification unit identifies whether or not the operator having the biometric information detected by the biometric information detection unit is the salesperson based on salesperson data acquired by associating the biometric information items of the salespeople of the store and predetermined motions of the salespeople with the salesperson, and
the motion detection unit detects the predetermined motion associated with the salesperson identified by the salesperson identification unit.

3. The device according to claim 1 or 2,
wherein the motion detection unit detects the motion of the operator based on the biometric information of the operator detected by the biometric information detection unit.

4. The device according to claim 3,
wherein the biometric information detection unit detects a face feature from an image comprising a face of the operator, and
the motion detection unit detects a motion with at least a movement of the face of the operator.

5. The device according to any one of claims 1 to 4,
wherein the biometric information of the operator comprises at least one of positions of eyes, nose, and mouth of the operator.

6. The device according to any one of claims 1 to 5,
wherein the motion detection unit uses a plurality of captured images to detect the predetermined motion of the operator.

7. The device according to any one of claims 1 to 6,
wherein the commodity sales data processing device is a self-checkout POS terminal.

8. A commodity sales data processing system comprising the commodity sales data processing device according to any one of claims 1 to 7, the system comprising:
a POS terminal comprising the biometric information detection unit,
a biometric information transmission unit configured to transmit the biometric information, and an operation mode change unit configured to change an operation mode of the commodity sales data processing system; and
a server device comprising a biometric information reception unit configured to receive the biometric information from the POS terminal,
wherein the operation mode change unit comprises an operation mode change instruction unit configured to transmit an instruction for changing an operation mode of the POS terminal to the POS terminal under a condition in which the salesperson identification unit identifies that the operator is the salesperson and the motion detection unit detects the predetermined motion.

9. A commodity sales data processing method comprising:
detecting biometric information of an operator who operates a commodity sales data processing device for use by a customer who performs a settlement process in person when the customer buys a commodity in a store;
identifying whether or not the operator having the biometric information detected in the detecting of the biometric information is a salesperson based on biometric information items of salespeople of the store;
detecting a predetermined motion of the operator; and
changing an operation mode of the commodity sales data processing device under a condition in which the operator is identified as the salesperson in the identifying and the predetermined motion is detected in the detecting of the predetermined motion,

10. The method according to claim 9,
wherein detecting biometric information of the operator precedes detecting the predetermined motion of the operator.

11. The method according to claim 9 or 10,
wherein detecting biometric information of the operator follows detecting the predetermined motion of the operator.

12. The method according to any one of claims 9 to 11,
wherein detecting biometric information of the operator and detecting the predetermined motion of the operator are simultaneously performed.

13. The method according to any one of claims 9 to 12,
wherein identifying whether or not the operator having the biometric information detected is the salesperson based on salesperson data acquired by associating the biometric information items of the salespeople of the store and predetermined motions of the salespeople with the salesperson.

14. The method according to any one of claims 9 to 13,
wherein detecting the predetermined motion of the operator comprises detecting the biometric information of the operator.

15. The method according to any one of claims 9 to 14,
wherein detecting biometric information of the operator comprises detecting at least one of positions of eyes, nose, and mouth of the operator.
